# EUROPEAN PATENT APPLICATION

(11) **EP 1 827 009 A1**
(43) Date of publication of application: **29.08.2007**
(21) Application number: 06004030.0
(22) Date of filing: 28.02.2006
(51) Int. Cl.: H04N 5/44

(54) **Video encoder and decoder for an improved zapping service for mobile video reception**

(71) Applicant: MATSUSHITA ELECTRIC INDUSTRIAL CO., LTD, Kadoma-shi, Osaka 571-8501 (JP)
(72) Inventor: Kursawe, Thomas, Monzastrasse 4C 63225 Langen (DE); Scheid, Albrecht, Monzastrasse 4C 63225 Langen (DE); Düking, Sven, Monzastrasse 4C 63225 Langen (DE)
(74) Representative: Grünecker, Kinkeldey, Stockmair & Schwanhäusser Anwaltssozietät

(57) **Abstract**

The present invention relates to an improved zapping service for broadcasting digital video data to mobile receiving terminals, and in particular to a video encoder and a video decoder therefore. The zapping service contains still pictures (intra-coded frames) that are synchronized with a corresponding P-frame of a main video service. The respective synchronization data is generated by the video encoder and transmitted to the mobile receiving terminal. The video decoder of the mobile receiving terminal ,is capable of employing the synchronization data to use a zapping service I-frame as a Random Access Point for decoding an encoded main service image sequence. Accordingly, waiting time until the main video service is ready for display after selection of a main new video service (zapping) is reduced, and a smaller number of bandwidth consuming I-frames have to be transmitted in the main service channel. Thereby the bandwidth requirements are reduced.

## Description

The present invention generally relates to encoding and decoding of video to be transmitted to mobile terminals for display. In particular, the present invention relates to an encoder for synchronizing still images with an encoded image sequence for separate transmission, and a decoder for employing still images synchronized with the received sequence of encoded image data for decoding.

Transmission systems for broadcasting digital video data have been standardized for different transmission paths. The standard DVB-S is directed to a satellite-based broadcast, the standard DVB-C to a cable transmission and the standard DVB-T to terrestrial broadcasting. The terrestrial broadcasting transmission system DVB-T is intended for a broadcast system targeting receivers at homes, offices, cars, etc. The DVB-T system is also suited for reception by mobile receivers, even at high driving speeds. However, mobile handheld devices impose further limitations due to a limited battery capacity and due to an extremely challenging heat dissipation in a miniaturized environment. Therefore, a further DVB transmission standard, DVB-H has been developed that is mainly dedicated for handheld terminals, i.e. small pocketable terminals which are battery operated. These terminals could be small devices such as mobile phones and provide reception inside buildings and cars.

The DVB-H standard is based on the terrestrial broadcasting transmission system DVB-T. While a DVB-T transmission system usually provides a bandwidth of ten Mbps or more, services used in mobile handheld terminals only require a relatively low bandwidth. The estimated maximum bit rate for streaming video using advanced video compression like MPEG-4 is around a few hundred kilobits per second. In view of the reduced average amount of data to be transmitted, DVB-H employs a time division multiplexing (TDM) transmission scheme. The DVB-H data are transmitted in time slices or bursts. Each burst uses a bit rate higher than the bit rate required when transmitting the data by a static bandwidth.

Between the burst data of a particular service, no data of that same service is transmitted. The intervals are off-times between the bursts to allow other services to use the remaining bandwidth. The receiver is thus enabled to only stay active for small portions of the time, i.e. only when receiving bursts. During the off-times, the receiver may monitor neighboring transmission channels for other services.

The capability of such a burst based transmission concept to enable reduced power consumption at the receiving side is increased with large off-periods. The range for the off-time is normally from 1 second to 15 seconds. For example, with an off-time of around 5 seconds, and on-times of less than 0.5 seconds, a power saving of around 90% can be achieved.

Alternatively, a mobile receiving terminal can receive other information like data for an electronic service guide (ESG). If no other data should be received between two adjacent bursts of a DVB-H service, the receiving section of the terminal can switch off and thus save battery power. When the next burst is transmitted the receiving section is reactivated for reception. The reactivation time is predefined and always delivered by the data that was received with the preceding data burst.

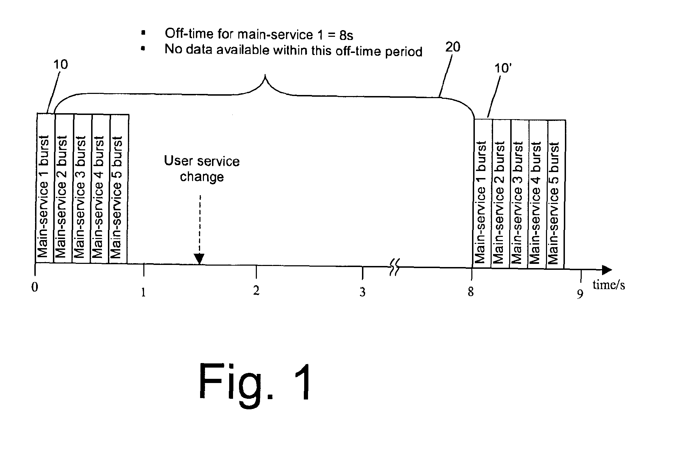

A general illustration of a transmission scheme for video broadcast to mobile receivers is given in Fig. 1 and will be described in the following. Although the following description is based on DVB-H standard by way of example, a person skilled in the art is aware of other transmission schemes for the same purpose. A further example is, for instance, the standard DMB (Digital Multimedia Broadcasting).

The DVB-H data is transmitted in time slices or bursts in a time division multiplexing (TDM) scheme. Each burst typically comprises around 2Mbits (256kBytes) of data. The burst duration needed for transmitting the burst data is generally around 140 milliseconds. Each burst contains video, audio and other data to bridge the off-time during which no burst data of the service is transmitted. Depending on the internal bandwidth and the amount of data transmitted with in a burst, the burst duration, i.e. the time from the beginning to the end of a burst, may vary considerably. The burst duration is preferably calculated by dividing burst size (in units of bits) by burst bandwidth (in units of bits per second). A correction factor may be taken into account in order to compensate for an overhead cost by the transport package headers of the DVB transmission scheme.

In the example of Fig. 1, reference numeral 10 denotes a burst for transmission of data of a particular service (named "Main Service 1" in the figure). In subsequent bursts, data of other services are transmitted. In the given example, the off-time 20 between a first burst 10 of main service 1 and a subsequent second burst 10' of the same service equals 8 seconds. Within this off-time interval, no data of main service 1 is available.

Between different streams to be transmitted on a transmission channel, the burst parameters like burst size, burst saturation, burst bandwidth and off-time may vary frequently.

The duration of the off-times in the order of 5 seconds results in correspondingly prolonged switching times between transmission channels. If a user switches from one main service (containing typically one main video service, one or several main audio services and optionally one subtitling service) to a new main service, between two bursts of this new main service, as indicated by the arrow in Fig. 1, no data will be available. On switching to another transmission channel, an image will only be reproduced after having received a first burst of the new service. A user switching to another television channel needs to wait for the first burst transmitted on the new channel which may last for around 5 seconds. Hence, a fast scan through the programs broadcast on different television channels is not possible.

For instance, in the situation illustrated in Fig. 1 the user starts to receive main service 1 at the time 1.5 seconds. Such a situation may occur, for instance, after powering on a mobile receiving terminal or in case of a switchover from another main service. After starting reception, the user has to wait 6.5 seconds, until at the time of 8 seconds the next burst of desired main service 1 is received.

A possibility to overcome the problem of the long waiting time is the feature of a zapping service. A zapping service conveys different kinds of data, such as still pictures, text, audio or even low resolution video. Every main service can have its own zapping service that is also transmitted in bursts, but has a considerably shorter off- time. Thus the terminal is able to receive, process, and present the zapping data considerably earlier after channel switching and the user can decide immediately, whether he wants to wait for the corresponding main service or not.

The zapping service consumes less bandwidth than the main service, depending on its content and transmission rate: for instance, for one picture per second or for low data rate audio, typically up to 10% of the bandwidth of the related main service is required. Therefore, preferably zapping services belonging to a plurality of main services are transmitted in a common zapping service burst. However, alternatively also the transmission of different zapping services in several bursts is possible.

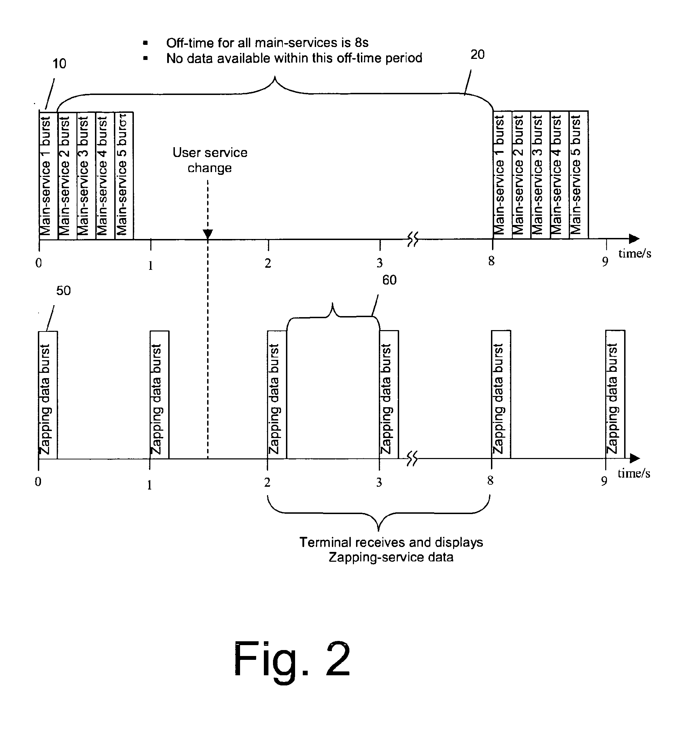

Fig. 2 illustrates an example, wherein the main service transmission situation of Fig. 1 is extended by zapping service data that are additionally transmitted and received by a terminal. In the given example, zapping data bursts 50 are transmitted in intervals 60 of 1 second. If a user of a reception terminal switches to another main service that has a zapping service available, the receiving terminal is automatically tuned for receiving the zapping service, and it is very likely that the zapping service is received first due to its short off-time. The zapping service is received and processed while waiting for the main service data burst. If the data that is transmitted within the zapping service is still pictures, the user gets a visual impression of the main service content considerably earlier after switching from one main service to another. After the data for the main service is received it can be processed and displayed to the user, and reception of the zapping service can be switched off. If, for instance, a user switches over to main service 1 at the time of 1.5 seconds, as indicated in Fig. 2, the next zapping data burst is received at the time of 2 seconds, i.e. only 0.5 seconds after switching, while the next main service burst will be received only 6.5 seconds after switching.

However, a further delay occurs at a mobile receiving terminal, until video images of the new main service can be displayed after switching over, due to the specific structure of the received encoded image data. Namely, as it is inevitable to compress the video data to be transmitted through a limited channel bandwidth, the video data of a main service are encoded according to video coding standards such as H.264/AVC or MPEG.4. In order to minimize bandwidth for transmission, standard video coding schemes employ predictive encoding. Therefore, the transmitted video data to be decoded at the receiving terminal, comprises at least P-frames and I-frames. P-frames are predicted frames. These frames are predicted from previous I- or P-frames. The P-frames are very small in size of data compared to I-frames. Thus in order to achieve an effective video transmission, it is desirable to have as few I-frames in the stream as possible.

I-frames are intra-coded frames, which are not referenced to other frames and include the necessary data for an immediate decoding and display of the video content if the video decoder is initialized. For the initialization of the video decoder, a sequence parameter set and a picture parameter set are necessary. The sequence parameter set defines an order, in which the received frames have to be decoded. In a predictive coding scheme, the order of decoding may be different from the order of display. The picture parameter set includes parameters defining picture features, such as horizontal and vertical resolution and pixel bit width. These parameter sets are delivered in the same way as the video data.

According to H.264/AVC video encoding standard, I-frames can be encoded as instantaneous decoder refresh pictures (IDR), which include the necessary parameter sets. Only after reception of an IDR of the new main service after switchover, the parameter sets necessary for initialization of the decoder are therefore available. Accordingly, the decoder can start decoding of the video sequence of the new main service only at the position of an I-frame within the encoded video data sequence.

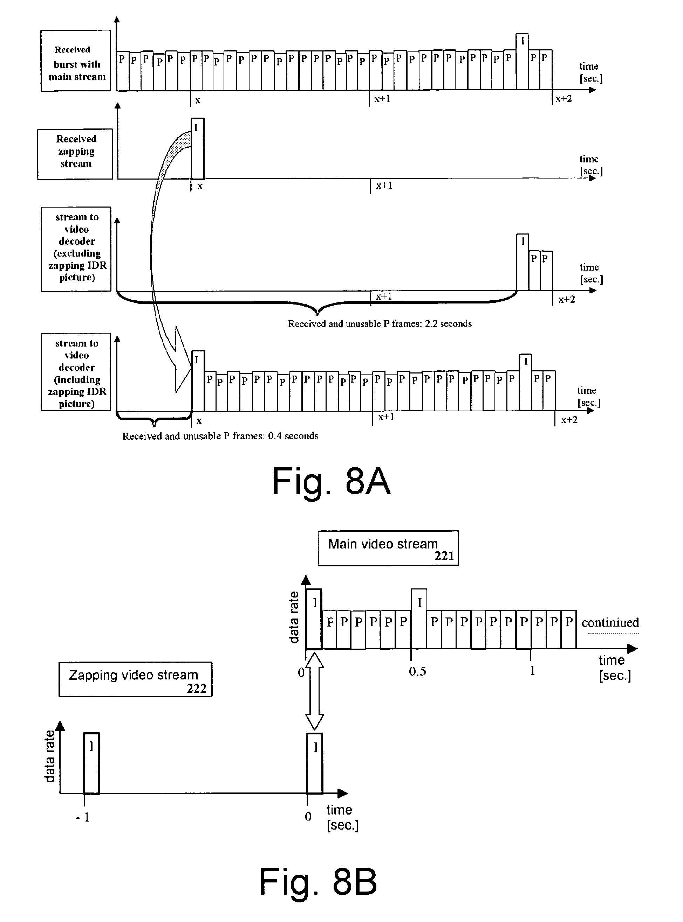

On the other hand, in a DVB-H broadcast environment, the conveyed video data from the video encoder are encapsulated into network protocols RTP (Real Time Protocol), UDP (User Datagram Protocol) and IP (Internet Protocol). There is however, no correlation between video encoder and IP encapsulator for packetizing the video data for transmission. Accordingly, an I-frame (IDR) may occur at any position of a received data burst of a main service. In particular, it is very unlikely in a DVB-H broadcast environment that the first video frame within a received data burst is an IDR. The worst case for a service switching procedure would be to have the first IDR at the end of a received data burst. This means that almost all of the received data cannot be displayed because it is content transmitted as P-frames. As P-frames cannot be used for video decoding up to the first IDR picture in the data burst, these P-frames must be discarded. Discarding P-frames at the beginning of a data burst, which contain video content for a certain further increases the delay until the actual video presentation starts on the screen of a mobile receiver after switching to a new service. An example, wherein the first I-frame of a burst is situated almost at the end of the received burst, is illustrated in Fig. 8A (1^{st} and 3^{rd} diagrams) and will be explained in more detail below.

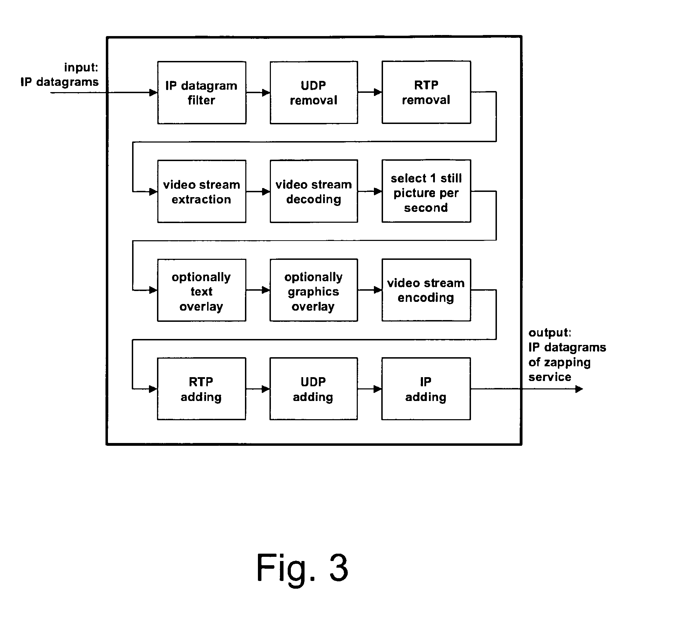

Fig. 3 illustrates a prior art scheme for generating a zapping service comprising still images. The zapping service generation scheme of Fig. 3 generates a still picture type zapping service from a corresponding main video service. The zapping service data is generated after the main video service has already been encoded by a video encoder and embedded in IP datagrams by a network packetizer. Subsequently, the zapping service generator according to Fig. 3 filters from all IP datagrams those of the associated main service and processes them in order to output IP datagrams of the zapping service, which is derived from and relates to the main video service. However, as the generation of zapping service conventionally is performed in a separate step, after the main video service data has already been encoded and encapsulated for transmission, no precise temporal correlation between the zapping service and the main video service can be achieved.

It is therefore a drawback of the prior art video encoder and decoder for mobile video receiving terminals, that still pictures provided with the data of a zapping service cannot be employed to minimize the waiting time until presentation of a new main service after switchover can be started, although the zapping service bursts are transmitted and received in much smaller intervals than the intervals between the bursts of the main service. The conventional zapping service generator does not use synergy with the video encoder. Instead, it encodes the zapping stream independently from the video encoder.

On the other hand, the transmitted video stream consists of an unbound set of video sequences. In the simplest case, every video sequence starts with an IDR picture, followed by a number of P-frames. However, more sophisticated predictive coding schemes, such as bidirectional coding are possible as well. The video stream is segmented in bursts by an IP encapsulator. The IP encapsulator compiles the bursts independent of the boundaries of the video sequences, but to a fixed burst size. The IP encapsulator does not consider the presence and position of IDR pictures within the burst. The video decoder in a receiving terminal can start decoding of the received video streams only at the beginning of the video sequence (beginning with an IDR picture). Therefore the video decoder needs to drop the leading P-frames of the first burst received after service switchover, until the next IDR picture is received (if a burst does not occasionally start with an IDR). Therefore, several seconds of video data cannot be displayed to a user, although they are available in the terminal.

It is a further drawback of the prior art zapping service generator, that the video stream decoding and repeated encoding in the zapping generator adds pixel errors to the zapping stream.

The present invention aims to provide an encoding method, an encoder, a decoding method and a decoder that enable a reduction of the waiting time until video data of a new video service can be displayed on a mobile terminal, after switchover to reception of a new video service.

This is achieved by the features of the independent claims.

According to a first aspect of the present invention, a video encoder for encoding a sequence of input video images for transmission to a mobile receiver is provided. The video encoder comprises coding means for encoding the input image sequence to a sequence of encoded image data employing a predictive coding procedure. The video encoder further comprises synchronization means for generating synchronization data indicating the position of an individual image to be transmitted separately to the mobile receiver with the input image sequence.

According to a second aspect, a video decoder for decoding encoded image data in a mobile receiver for receiving a sequence of encoded image data and image data of an individual image together with synchronization data indicating the position of the individual image with respect to the image sequence is provided. The video decoder comprises decoding means for decoding encoded image data of the image sequence employing a predictive decoding procedure. The video decoder moreover comprises synchronizing means for starting the decoding process of the decoding means based on the position of the individual image, such that the predictive decoding of the encoded image data following the indicated position refers to the individual image as a reference image.

According to a third aspect of the present invention, a method of encoding a sequence of input video images for transmission to a mobile receiver is provided. The method comprises the step of encoding the input image sequence into a sequence of encoded image employing a predictive coding procedure. The method further comprises the step of generating synchronization data indicating the position of an individual image to be transmitted separately to the mobile receiver within the input image sequence.

According to a fourth aspect of the present invention, a method of decoding encoded image data in a mobile receiver for receiving a sequence of encoded image data and image data of an individual image together with synchronization data indicating a position of the individual image with respect to the image sequence is provided. The method comprises the step of decoding encoded image of the image sequence employing a predictive decoding procedure. The method further comprises the step of employing the synchronization data for starting the decoding process based on the position of the individual image such that the predictive decoding of the encoded image data following the indicated position refers to the individual image as a reference image.

It is the particular approach of the present invention to transmit individual images from a main service separately therefrom in combination with synchronization information. The separately transmitted image together with the synchronization information serves for initializing the decoding procedure of predictively encoded image data of the main service at a mobile receiver. Based on the position information provided by the synchronization information, a predictively encoded image of the main service image sequence is replaced by the individual image and enables as a reference image the decoding of the subsequent images.

Preferably, the individual image to be separately transmitted to the mobile receiver is also encoded on the encoder side, and more preferably as an intra-coded frame. By also employing video encoding for the individual image data the bandwidth requirements for the zapping service can be reduced. As intra coded frames are not referenced to other frames, the intra-coded frames initialize the decoding procedure such that all following coded pictures can be decoded without reference to any picture of the sequence prior to the intra-coded frame.

More preferably, the individual image is encoded as an instantaneous decoding refresh access unit (IDR). By employing IDR data comprising, besides an I-frame, additional parameters, such as a sequence parameter set and a picture parameter set, the present invention can be applied to more sophisticated predictive encoding schemes, such as bidirectional encoding.

Preferably, a plurality of individual images is transmitted separately (i.e. within a zapping service) to the mobile receiver, and on the encoder side the synchronization data is generated for indicating the positions of all these individual images within the input image sequence. Accordingly, a plurality of reference images for starting decoding the encoded video sequence of the main service will be available on the decoder side.

According to preferred embodiment, a video encoder in compliance with the present invention further comprises selection means for selecting a predetermined image of the input image sequence as individual image to be transmitted within the zapping service. More preferably, the selected predetermined image is encoded within the sequence of encoded image data is a P-frame (while the individual image is separately transmitted as an I-frame). Accordingly, on the receiver side the decoding of the video sequence can be started from the position of the predetermined image, as the individual image of the zapping service is available as a reference image. On the other hand, it is not necessary to transmit the predetermined image as an I-frame in the main service, thereby saving bandwidth of the main service.

More preferably, every Nth image of the input image sequence to be encoded as a P-frame is selected as individual image, wherein N is a natural number. Alternatively, a current image of the input image sequence can be selected as an individual image to be transmitted in the zapping stream in constant time intervals. The constant time intervals are preferably counted by a timer in the video encoder.

Preferably, the video encoder according to the present invention comprises a still image buffer for storing images of the input image sequence in uncoded form, and the individual images of the zapping service are selected from the images stored in the still image buffer. Accordingly, the raw video data that is the encoding basis of a frame of the encoded video data of a main video service is used once more as a zapping-service I-frame.

Preferably, the data to be transmitted to the mobile receiver are encapsulated in form of IP packets. For synchronization, the IP packets preferably comprise timestamps included in the synchronization data. More preferably, the data is encapsulated to IP packets in conjunction with UDP and RTP. Still more preferably, the timestamps are inserted in the RTP packet headers in such a manner that RTP packets including data originating from the same image of the input image sequence have the same timestamp. Accordingly, the position of a particular individual image received in a zapping service with respect to the main service data sequence can be determined in an especially simple manner, by comparing the timestamps of the respective RTP packet headers.

According to a further preferred aspect of the present invention, a transmitter for transmitting a sequence of encoded image data is provided. The transmitter comprises a video encoder according to the first aspect of the present invention. The transmitter further comprises transmission means for transmitting the sequence of encoded image data, the individual image and the synchronization data.

Preferably, the transmission means transmit the sequence of encoded image data in form of bursts in intervals on a first transmission channel. As outlined above, burst wise transmission of video data enables a considerable reduction of battery power consumption in a low power receiving device. More preferably, the individual images of the zapping service are transmitted in form of bursts in intervals on another transmission channel. More preferably, each burst of the zapping service transmits a single individual image of the zapping service. Accordingly, every burst of the zapping service received after channel switch over comprises the data necessary to start decoding of the corresponding main service video sequence.

Preferably, the intervals between the bursts for transmitting a main service are larger than the intervals between the bursts for transmitting zapping service. Accordingly, battery power consumption is improved, while a main service is received, while during the relatively short intervals of switching over to a new channel (zapping), data are received in short intervals to be used as a reference for starting the decoding of a respective main service, as well as for bridging the waiting time.

Still more preferably, the sequence of the encoded data is transmitted in accordance with DVB-H or DMB standard.

Preferably, the zapping service bursts transmitted and received in the time interval between two main service bursts comprise still image data corresponding to image data of the main service that is transmitted with the following burst. While on the encoder side, respective image data are available in advance, since a predefined amount of encoded and compressed data is to be accumulated until a burst is completed for transmission, on the decoder side an individual image to be used as a reference image can be received prior to the corresponding part of the encoded sequence of the main service. Therefore, the still image of the first zapping burst received after switch over is available as a reference image, when the corresponding main service data is received.

According to a further preferred aspect of the present invention, a mobile receiver for receiving a sequence of encoded image data for display is provided. The mobile receiver comprises a receiving section for receiving the sequence of encoded image data and image data of an individual image together with synchronization data indicating a position of the individual image with respect to the image sequence. Further, the mobile receiver comprises a video decoder according to the second aspect of the present invention. Moreover, the mobile receiver comprises a display for displaying image data received by the receiving section and decoded by the video decoder.

Preferably, the mobile receiver receives the sequence of encoded image data in bursts, wherein the bursts are separated by predetermined time intervals. The mobile receiver further comprises a still image buffer for storing the image data of an individual image (zapping service data), until a burst comprising the position of the sequence of encoded image data indicated by the synchronization data has been received. Accordingly, a zapping service image that is transmitted and received prior to the burst of the main service comprising the corresponding data of the encoded image sequence, can be stored until it is required as a reference image for decoding the main video image sequence.

More preferably, the mobile receiver is adapted to receive a plurality of main video services transmitted on different transmission channels, that can be selected for reception. The plurality of different main services is preferably associated with respective zapping services receivable by the receiving section, such that synchronization data is available for indicating the position of a zapping image with respect to the selected main video service.

Still more preferably, the mobile receiver is capable of displaying a still image received within the zapping data corresponding to a particular main service, until the data of the corresponding main video service and a newly selected transmission channel has been decoded for display. Accordingly, the waiting time after selection of a new main video service can be bridged with a still image of the zapping data. On the basis of the displayed data, the user can decide to wait for the main video service of the selected channel, or to perform a subsequent switchover.

Preferably, the mobile receiver is capable of starting the display of the encoded image data with a reduced initial frame rate. More preferably, the start of the display is shifted backward corresponding to the additional display time resulting from said reduced initial frame rate. Accordingly, the time period can be bridged, wherein leading frames of a first received burst of a new received main channel should be displayed that cannot be decoded as no main service or zapping service reference frame is available for decoding. Moreover, thereby short interruptions in receiving main service image data can be bridged with minimal distortions.

Further preferred embodiments of the present invention are the subject matter of dependent claims.

Other embodiments and advantages of the present invention will become more apparent from the following description of the preferred embodiments given in conjunction with the accompanying drawings, in which:
Fig. 1 illustrates a burst wise transmission of a DVB-H main service;
Fig. 2 illustrates the burst wise transmission of a DVB-H main service and a zapping service;
Fig. 3 illustrates a scheme of a conventional zapping service generator;
Fig. 4 is a block scheme of a video encoder with zapping service generation in accordance with the present invention;
Fig. 5 is a block diagram of an encoding means for predictive encoding used in an exemplary embodiment of a video encoder according to the present invention;
Fig. 6 schematically illustrates an example of video data output from a video encoder according to the present invention;
Fig.7 illustrates the data output from a video encoder according to an embodiment of the present invention on the basis of internet protocol packets in compliance with UDP and RTP;
Fig. 8A illustrates the usage of a zapping service IDR picture as an initial reference image to start decoding of an associated main video service sequence;
Fig. 8B illustrates a detailed example of employing a zapping video service I-frame for starting decoding of the corresponding main video stream;
Fig. 9 illustrates the general structure of a video decoder in a receiving terminal in accordance with the present invention;
Fig. 10 is a block diagram illustrating the scheme of a video decoder to be used in an exemplary embodiment of the present invention;
Fig. 11 is a flowchart of an exemplary implementation of the processing of the received zapping service according to the present invention;
Fig. 12 is a flowchart illustrating an exemplary implementation of the main service processing in a receiving terminal according to the present invention; and
Fig. 13 is a flowchart illustrating the details of the video data decoding step S360 of the exemplary implementation of Fig.12.

The illustrative embodiments of the present invention will now be described with reference to the drawings.

The present invention relates to the generation of a still picture type zapping service (second service) that has a precise matching of the content to a corresponding main video service (first service). The matching is achieved in a video encoder according to the present invention by encoding a given video frame twice, namely firstly into a P-frame as part of the main video stream, and secondly into an I-frame as part of the zapping stream.

The present invention further relates to the usage of a still picture type zapping service (second service) by a mobile receiving terminal, which provides the ability to start decoding a related main video service (first service) considerably earlier than in the prior art. Thereby, video decoding is improved.

The still picture type zapping service consists of a slide show, which is delivered separated from the main video service data. Synchronization data provides direct relation between the zapping data and the main video service regarding time and content. A quick start of the decoding of the main video sequence is achieved in that a still picture of the zapping service, which is encoded as an instantaneous decoder refresh (IDR) picture corresponding to the position of a P-frame in the main video data sequence is employed as a reference image for decoding images following the particular P-frame of the main video image sequence. In other words, the IDR picture of the zapping service serves as a Random Access Point (RAP) in the main video stream, and is therefore capable of completing an initially incomplete main video sequence. With the aid of the zapping service, the amount of data rate expensive RAPs (I-frames) to be transmitted in a main video stream can be reduced considerably, thereby saving the amount of data rate for the main video service.

The processing of the related audio track accompanying the video service, is not affected, and therefore a description thereof is omitted.

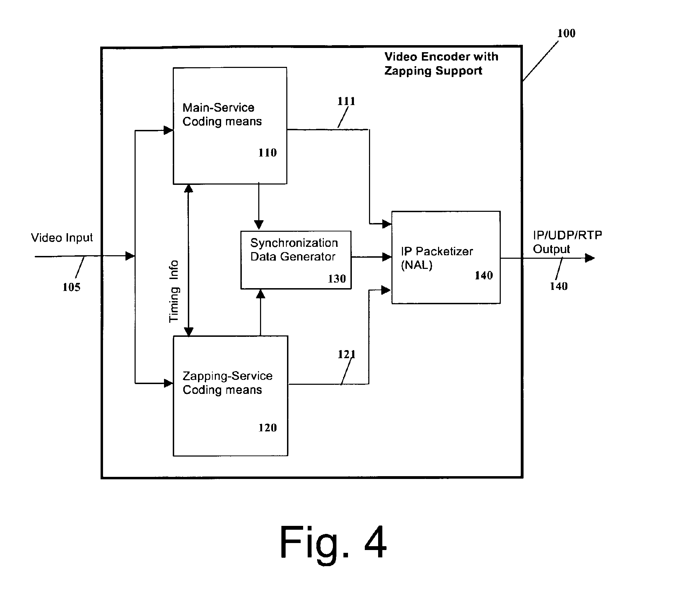

An exemplary embodiment of a video encoder adapted for generation of a zapping service according to the present invention will now be described with reference to Fig. 4. Although the invention is described with respect to DVB-H standard by way of example herein, the invention is not limited to an implementation within that standard. For instance, the invention can be implemented on the basis of the standard DMB (digital multimedia broadcasting) as well.

According to the described embodiment, the video encoder is employed in a DVB-H broadcast environment, wherein the video data to be transmitted are frames and pictures encoded in compliance with a video coding standard, such as H264/AVC, MPEG 4, or another currently available or forthcoming coding scheme, encapsulated into network protocols RTP, UDP and IP. This is done by the Network Abstraction Layer (NAL) in the IP packetizer block 140 of the encoder 100. Coding means 110 for the main service, and coding means 120 for the zapping service deliver the main and the zapping stream to the IP packetizer 140. The NAL layer of the IP packetizer 140 bundles the video data to NAL units. The NAL units include beside the encoded video data all data for transport specific features.

The raw main video stream from the video input is encoded in the main service coding means 110 according to the applied standard, such that a decoder in compliance with the applied standard can be decode it.

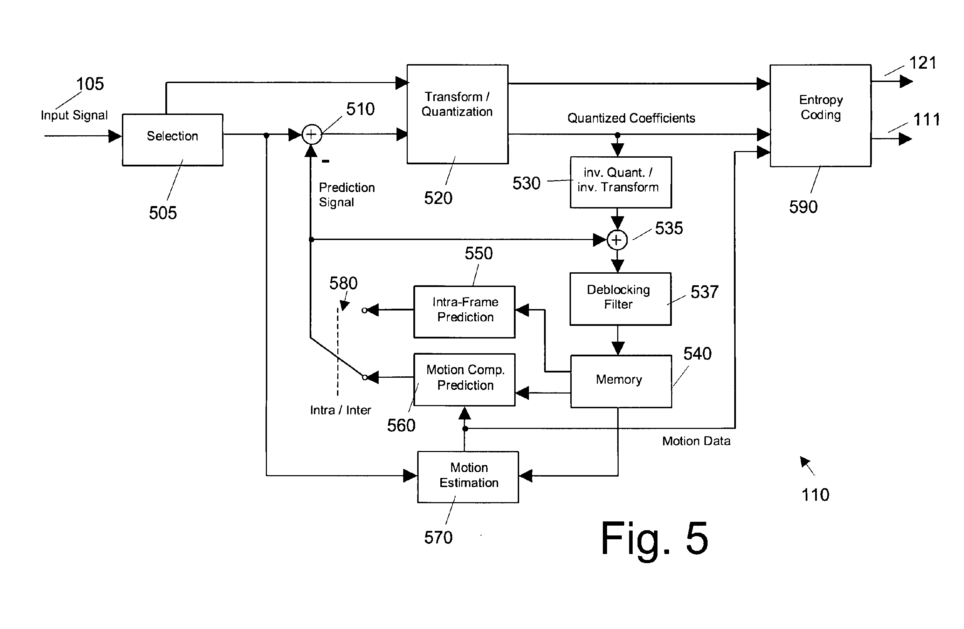

An example of video encoding means that can be employed as main service coding means 110 according to the present invention will now be described in detail with reference Fig. 5. A coding means comprises a subtractor 510 for determining differences between a current video image from the input image sequence 105 and a prediction signal of the current image which is based on previously encoded images. A transform and quantization unit 520 transforms the resulting prediction error from the spatial domain to the frequency domain and quantizes the obtained transform coefficients. An entropy coding unit 590 entropy encodes the quantized transform coefficient.

The operation of the video encoder Fig. 5 is as follows. The encoder employs a differential pulse code modulation (DPCM) approach, which only transmits differences between the subsequent images of the input video sequence. These differences are determined in subtractor 510, which receives the video images to be encoded in order to subtract a prediction of the current images therefrom.

The prediction is based on the decoding result ("the locally decoded image") of previously encoded images on the encoder side. This is accomplished by a decoding unit incorporated into video coding means 110. The decoding unit performs the encoding steps in reverse manner. An inverse quantization and inverse transform unit 530 dequantizes the quantized coefficients and applies an inverse transform to the dequantized coefficients. In adder 535, the decoded differences are added to the prediction signal .

The motion compensated DPCM, conducted by the video encoding means of Fig. 5, predict the current field or frame from corresponding previous field or frame data. This prediction is based on an estimation of motion between current and previous fields or frames. The motion estimation is determined in terms of two dimensional motion vectors, representing a displacement of pixels between the current and previous frames. Usually, motion estimation is performed on a block-by-block basis, wherein a block in a current frame is compared with blocks in previous frames until a best match is determined. Based on the comparison result, a displacement vector for each block of a current frame is estimated. This is accomplished by a motion estimator unit 570 receiving the current input signal and the locally decoded images.

Based on the results of motion estimation, motion compensation performed by motion compensator prediction unit 560 provides a prediction utilising the determined motion vector. The information contained in the prediction error block representing the differences between the current and predicted block, is then transformed into the transform coefficients by transform unit 520. Generally, a two-dimensional Discrete Cosine Transform (DCT) is employed therefore.

In accordance with a H.264/AVC, the input image is divided into macro blocks. The macro blocks are encoded applying an "intra" or "inter" encoding mode. In inter mode, a macro block is predicted by employing motion compensation as previously described. In intra mode, the prediction signal is set to 0, but the video encoding standard H.264/AVC additionally employs a prediction scheme based on already encoded macro blocks of the same image in order to predict subsequent macro blocks.

Only intra-encoded images (I-type images) can be encoded without reference to any previously decoded image. The I-type images provide error resilience for the encoded video sequence. Further, entry points into bit streams of encoded data are provided by the I-type images in order to enable random access, i.e. to access I-type images within the sequence of encoded video images. The switch between intra mode, i.e. a processing by intra-frame prediction unit 550 and inter-mode, i.e. a processing by motion compensation prediction unit 560 is controlled by intra/inter switch 580.

Further, a de-blocking filter 537 may be provided in order to reduce the presence of blocking effects in the locally decoded image.

The result is stored in reference memory 540 for the subsequent prediction processing.

The transform quantization unit 520 of Fig. 5 and the entropy coding unit 590 may be employed as zapping service coding means 120, wherein the zapping service still images are encoded without motion compensation as well. Although not explicitly shown for simplicity, intra-frame prediction may be included into the processing path for the zapping service, as well. Alternatively, a separate coding means 120 can be provided for encoding the zapping service data.

Precise matching of contents is achieved by frequency encoding a given video frame from the input image sequence twice, namely, first into a P-frame as part of the main video stream 111 and second into an IDR as part of the zapping stream 121. Therefore, at the entrance of the coding means, a selector 505 is provided that selects particular of the received input images for being separately encoded and transmitted a second time as I-frames. Moreover, an input buffer (not shown) may be provided for storing input images prior to the selector 505.

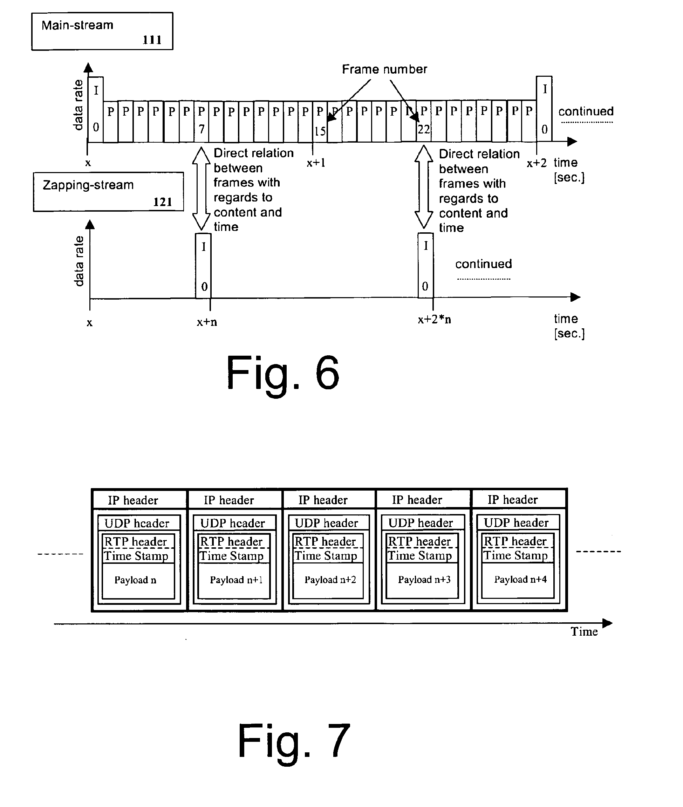

As can be seen from Fig. 6, the zapping stream consists only of IDRs and these IDRs will be encoded in coding means 120 with a flexibly selectable fixed time period (for instance one IDR per second). Thus, both streams (111, 121) will differ in the amount of P-frames (zero for zapping stream), in the overall amount of frames per second and in the time positions of the I-frames.

An IDR access unit comprises, in addition to an I-frame, additional parameters, such as a sequence parameter set. These additional parameters enable IDR frames to be employed as Random Access Points in case of both sophisticated predictive coding algorithms, such as bi-directional coding, wherein the sequence of decoding in the decoder differs from the sequence of display. In order to break inter-dependencies from any picture decoded prior to an IDR-picture, the IDR picture resets the multiframe buffer of the decoder.

The parameter sets that are included in the zapping IDRs are valid for the main service decoding at the terminal, too. The amount of zapping service IDRs per second is fully flexible. Every input video picture that is encoded as a main service P-frame can have its corresponding zapping-service IDR. The frame numbers of the main service P-frames that shall have a corresponding zapping service IDR is definable. So the content provider is able to define the entire frame numbers of the P-frames that shall have a corresponding zapping I-frame (IDR).

In the example shown in Fig. 6, a zapping I-frame complements every seventh and twenty-second main service P-frame. Therefore, the selector 505 has to be set up in a way to encode the input images corresponding to every seventh and twenty-second P-frame from the main service once more as a zapping service I-frame. It is for this purpose that the input video data that is the encoding basis of every seventh and twenty-second P-frame shall be used once more as the encoding basis for the zapping I-frame encoding.

Alternatively, it is possible to use a decoded picture from the seventh and twenty-second P-frame as encoding basis for the zapping I-frame. These decoded pictures are available from the encoder reference buffer 540 and are commonly used as prediction basis for the next (in the illustrated example: eighth and twenty-third) P-frames in the encoder 110.

Alternatively, instead of predetermining sequence numbers of P-frames, a time-out timer can be employed. The time-out timer forces the generation of one zapping I-frame each time at the end of a pre-selected time-out period independently of the P-frame number. This alternative enables the generation of zapping-service IDRs at a constant rate independent from the frame sequence of the main service encoding.

In accordance with the present invention, the only additional expense to generate a zapping-service is to encode every user chosen P-frame content once more as an I-frame and output these I-frames (IDRs) as additional video stream 121 with lower frame rate.

After encoding main service data 111 and zapping service data 121, all data are conveyed to a network packetiser 140. The network packetiser encapsulates the encoded video data 111, 121 to Internet Protocol packets in conjunction with User Datagram Protocol and Real Time Protocol as illustrated in Fig. 7.

The IP/UDP/RTP encapsulation is used to provide the data on IP network. The present invention is however not limited to the particular encapsulation described. A person skilled in the art is aware that other encapsulation protocols may be employed as well, in conjunction with the present invention. As outlined above, exact timing information between the zapping service data and the main service data is required in order to employ the zapping for starting the main service decoding process at the receiving terminal. Therefore, the video encoder 100 according to the present invention includes synchronisation data generator 130. Synchronisation data generator 130 generates synchronisation data indicating the position of a particular zapping service individual image encoded by encoding means 120 with respect to the image sequence encoded by main service coding means 110. Synchronisation data is forwarded from synchronisation data generator 130 to network packetiser 140, and forwarded within the encapsulated IP/UDP/RTP output data 141 for transmission together with encoded video data.

According to a particular preferred embodiment, the timestamps that are included in the RTP packet headers (see Fig. 7) can be employed as synchronisation data for synchronisation between the two corresponding frames. Both the main service P-frames and the zapping service I-frame (IDR) are encapsulated to RTP packets separately. Synchronisation data generator 130 ensures that all RTP packets that belong to the two corresponding frames (i.e. originating from the same frame of the input image sequence) hold exactly the same RTP timestamp. Accordingly, the receiving terminal can easily determine which main service P-frame corresponds to the received zapping service I-frame by evaluating the RTP timestamps.

Alternatively, besides time synchronisation between zapping service I-frame and corresponding main service, P-frame can be achieved in the same manner, as an audio stream and the corresponding video stream are synchronised In compliance with ETSI standard TS 102005, "DVB Specification for the use of video and audio coding in DVB services delivered directly over IP", Annex. Accordingly, both main stream RTP packets and zapping stream RTP packets are accompanied by Real Time Transport Control Protocol (RTCP) sender report packets. RTCP sender report packets comprise an RTP timestamp together with an NTP (Network Time Protocol) timestamp. Both timestamps correspond to the same instant in time. However, the RTP timestamp is expressed in the same unit as RTP timestamps in data packets, while the NTP timestamp is expressed in wall clock time in accordance with IETF standard RFC 3550. To synchronise two data streams, such as the main service and the zapping service, an RTCP sender report packet of the main service and a RTCP sender report packet of the zapping service must be received. As the wall clock time of a given time instant is exactly the same for both RTCP packets, an offset of the respective RTP timestamps with the help of NTP wall clock in the RTCP packets can be determined and therefore a correspondence within RTP packets of the respective services can be established, even if these do not have exactly the same RTP timestamps. It is a drawback of the alternative approach that every zapping IDR must be accompanied by a RTCP packet to ensure the synchronisation between the main service P-frame and the zapping service IDR. Thus, a higher amount of bandwidth is required.

The procedure of employing a zapping service IDR picture as a reference frame for decoding encoded images from the main service sequence will now be described with reference to Figs. 8A and 8B. The time line on top of Fig. 8A "Received burst with main stream" shows the sequence of encoded main service video data, which was extracted from the first received main service burst after switching over to a new main service. As can be seen from the figure, the heading 33 frames of the burst are P-frames while the corresponding IDR picture was contained in the preceding burst, which was not yet received. An IDR frame is included in the received burst only near the end of the burst (at the third last frame position within the burst). Moreover, as can be seen in the second time line of Fig. 8A, "Received zapping stream", a zapping stream still picture has been received. The still picture is encoded as an IDR picture and has been derived from the same original input picture as one of the P-frames, as marked by "x".

Conventionally, no synchronisation data between the zapping service I-frame and the corresponding main service P-frame is available. Therefore, in a prior art receiving terminal, as can be seen on the third time line, "Stream to video decoder (excluding zapping IDR picture)" the complete initial sequence of P-frames of the received burst is discarded and video presentation starts with the first I-frame received in the main service burst. In the example illustrated in Fig. 8A, 2.2 seconds of video are not displayed on the screen, although available in the terminal. However, the still picture from the zapping service may be displayed to the user to bridge the delay of the dismissed video content.

The bottom time line "Stream to video decoder (including zapping IDR picture) illustrates the decoder side processing according to the present invention. Since synchronisation data are generated by the encoder and received together with the main service and zapping service video data, the position of the zapping service I-frame with respect to the main service P-frames is available. The terminal comprises synchronisation means for evaluating the synchronisation data (for instance the RTP timestamps), and therefore is capable of determining the position of a zapping service I-frame with respect to the received main service burst. Thus, the received zapping stream I-frame can replace the P-frame at the respective position (marked as "x" in Fig. 8A) of the encoded main service image data sequence such as to be used as a reference frame for predictive decoding the subsequent P-frames. If several zapping IDR pictures with different timestamps have been received, as indicated in Fig. 8B and are stored in the terminal, the terminal may select the earliest one, which can replace a P-frame of the main service.

The advantage of the terminal processing according to the present invention is evident. Rather than dismissing a considerable number of initial P-frames (in the example of Fig. 8A: 33) according to the present invention and service decoding starts considerably earlier. For instance, according to the example of Fig. 8A, only six P-frames need to be dismissed and the decoding of the main video service and the presentation of its content can start 2.2 seconds - 0.4 second = 1.8 seconds earlier. Moreover, if a still picture-type zapping service is introduced in a DVB-H broadcast environment, distances between I-frames in the main service data can become larger, such that the amount of IDR pictures in the main video service can be smaller, and the data rate allocated for the main video service can be reduced. In an extreme case, it would be sufficient to have one IDR picture in the main video stream only at the scene changes.

The present invention can moreover be employed to further reduce the waiting time until a new main service can be displayed. As has been explained above with reference to Fig. 8A, it is likely that there is a number of leading frames of the first main service burst received after switchover that cannot be decoded, as no corresponding zapping I-frame is available. However, display of the new main service can nevertheless start at the same time as if all received frames could be decoded, by reducing the playback speed for at least an initial part of the decoded images of the first burst.

The reduced initial playback speed (corresponding to a reduced frame rate for display) can be kept constant, until enough decoded data are available to enable further continuous display at the normal playback speed, and then switched over to the normal playback speed.

Alternatively, the reduced playback speed can be increased continually, until the regular playback speed is reached. For instance, there can be a continuous display with increasing speed, starting from a zapping still image until normal playback speed is reached.

An example of the particular aspect of the present invention described above is given below with reference to Fig. 8A. It is however noted that the displayed and described values of time durations and frame rate reduction are given by way of example only and the present invention is not limited thereto.

According to the example of Fig. 8A, the discarding of the heading six P-frames results in a delay in 0.4 seconds prior to start displaying the video. It is desirable to avoid such an initial delay. However, the decoder cannot decode these six heading P-frames, even if a zapping service is available in accordance with the present invention. Instead, the playback can start immediately after assembling, but with reduced speed respectively reduced frame rate to compensate for the non-decodable video data. In the example of Fig. 8A, the first 0.8 seconds of the time axis can be bridged by playing the first six frames that are available for display (starting at the position "x" of the received data sequence), which originally were intended to bridge only 0.4 seconds, with half the frame rate. Then the frame rate is changed in the video decoder to its nominal value, and video playback continues with the nominal frame rate. During the initial 0.8 seconds, the sound, which would not timely fit to the video, is muted.

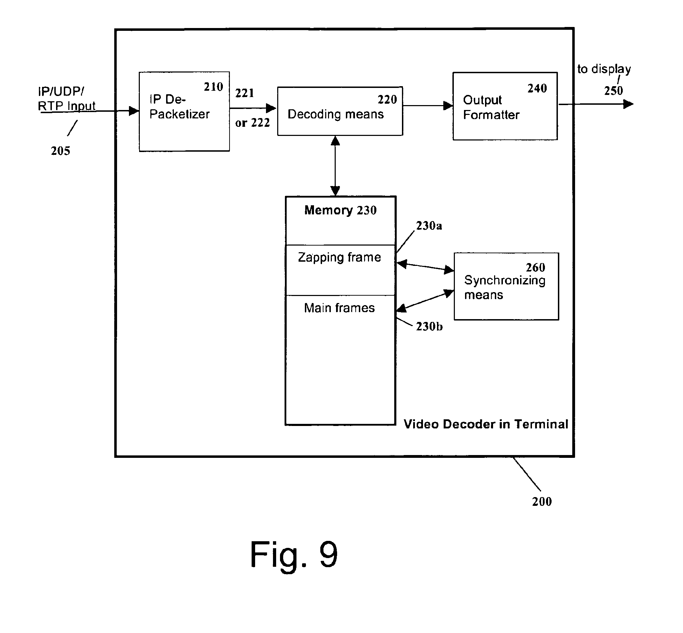

A block scheme of a video decoder according to the present invention in a receiving terminal is illustrated in Fig. 9.

The input data is received in form IP/UDP/RTP input packets 205. A de-packetiser 210 generates the encoded video image data sequence 221 of the main service and the encoded still image data of the zapping service 222 to be provided to a decoding means 220. Moreover, both zapping and main frames are stored in a memory 230 if desired. Synchronisation means 260 evaluate the synchronisation data received together with the video data in the packetised input stream 205. Accordingly, a zapping IDR frame is delivered to the decoding means 220 exactly at the time, when a corresponding main service P-frame is received and the IDR picture is desired as a reference image for decoding the subsequent main service images. The decoded main stream images are subsequently forwarded to display 250 via output formatter 240.

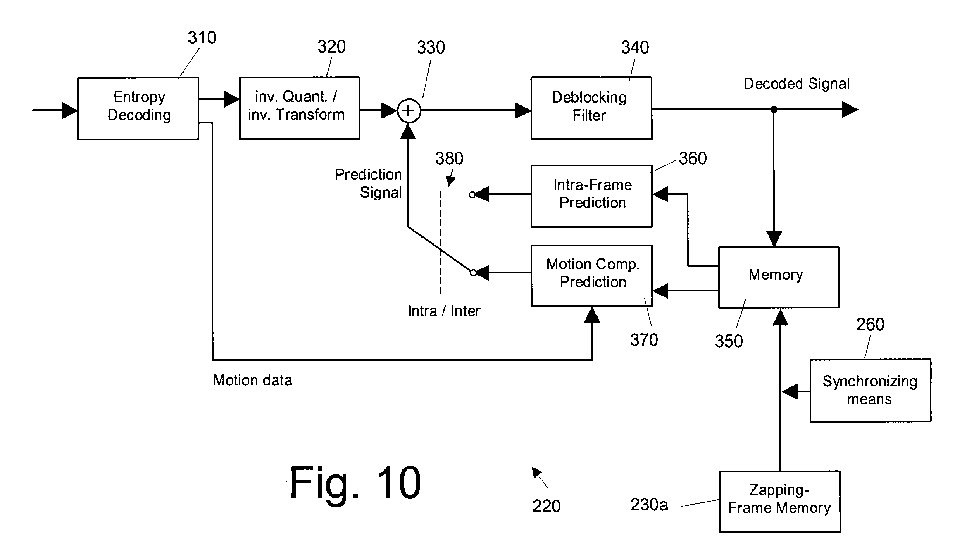

The configuration of decoding means 220 will now be described in more detail with reference to Fig. 10.

Generally, for reconstructing the encoded images at the decoder side, the encoding process is applied in reverse manner. First, the entropy encoding is reversed in entropy decoding unit 310. The entropy decoded coefficients are submitted to an inverse quantizer and inverse transformer 320 and the motion data is submitted to motion compensation prediction unit 370. The quantized coefficient data are subjected to the inverse quantisation and inverse transformer unit 320. The reconstructed image block containing prediction differences is added by adder 330 to the prediction signal stemming from the motion compensation prediction unit 370 in inter-mode of stemming from an intra-frame prediction unit 360 in intra-mode. The resulting image may be applied to a de-blocking filter 340 and the decoded signal is stored in memory 350 to be applied to prediction units 360 and 370. As no decoded I-frame from the received main service is available at the beginning of the first main service burst of a new main service channel, initially a zapping service image from the zapping frame memory 230a is applied as a reference image for decoding. Therefore, a zapping frame from zapping frame memory 230A is provided to decoder memory 350 upon a signal from the synchronisation means 260, in case the synchronisation means determines that a main service P-frame corresponding to an image stored in the zapping frame memory 230a has been received.

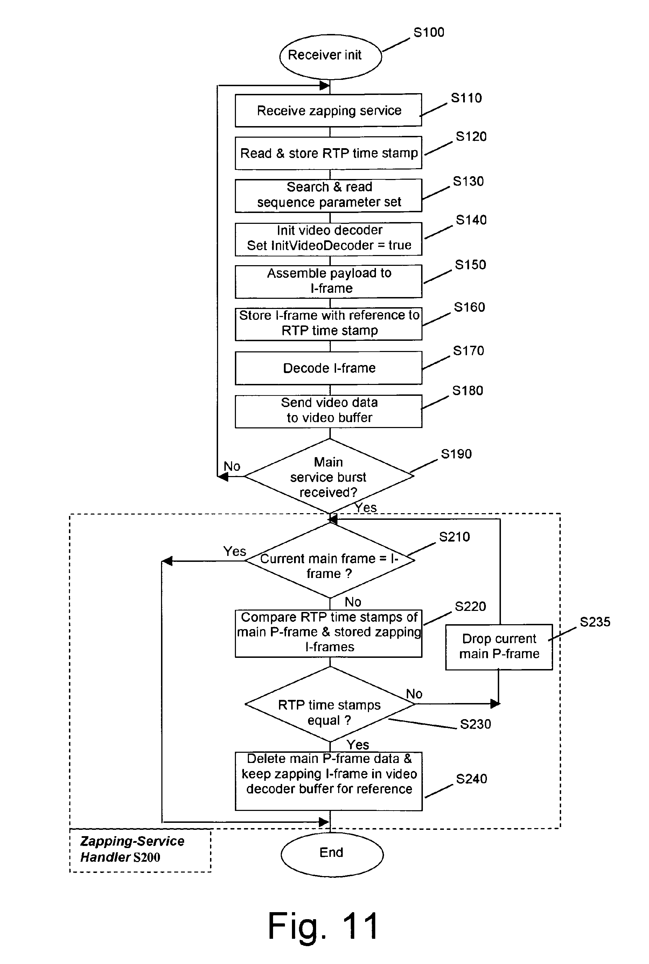

In the following, an exemplary implementation of the present invention in a receiver terminal will be described in more detail with respect to the flowcharts of Figs. 11 to 13.

The following description assumes that for all received main services corresponding zapping services are available. Thus the transmitter side is providing a related zapping service for each main service. If a user starts the receiver terminal or switches from the currently received main service to another main service the terminal is initialized for receiving the main service and the corresponding zapping service in parallel. The decision, which service is received first, depends only on the broadcast timing. If the user performs a main service switch in between two consecutive main service bursts (as indicated by the dashed line in Fig. 2) there is no main service data immediately available. Generally, zapping service data is expected to be available earlier than main service data due to the shorter burst intervals. Thus the terminal likely receives a zapping data burst first due to the shorter burst intervals.

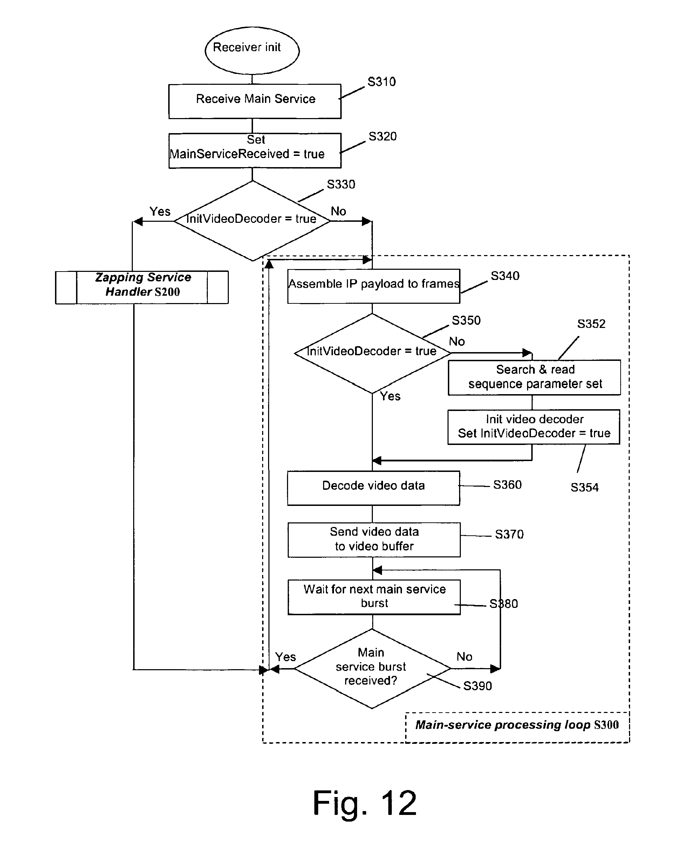

After reception, the terminal performs all the required preprocessing like assembling the IP packets, error correction if required and removing the IP and the UTP headers. The corresponding preprocessing is summarized in steps S110 of Fig. 11 (for the zapping service) and S310 of Fig. 12 (for the main service), respectively. Both preprocessings take place in parallel.

In the following, the further processing of the received zapping service data will be described in correspondence with Fig. 11. In subsequent step S120, the RTP timestamp value of the received RTP packets is stored. The timestamps shall be the same for every RTP packet that belongs to a transmitted zapping service IDR. In the next step S130 the terminal reads the sequence parameters contained in the IDR specified in ISO/IEC 14496-10 "Information Technology - Coding of Audio Visual Objects - Part 10: Advanced Video Coding". Preferably, the IDRs of the zapping service further comprise picture parameters defining picture properties for display, such as horizontal and vertical resolution, or pixel bit widths. Sequence and picture parameters that are included in the zapping IDRs are also applicable to the main service.

Accordingly, the sequence and picture parameters sets within the IDR can be used to initialize the video decoder for both main and zapping service. Thus, if the video decoder initialization is done once at step S140, it can be used to decode both services without reinitialization in between.

In the following step S150 the zapping I-frame is assembled from the RTP packet payload. If the complete I-frame is available at step S160 it is stored together with a reference to the appropriate RTP timestamp stored at step S120. Furthermore the video decoder decodes the I-frame at step 170 and the resulting picture is sent to the picture buffer 230a for displaying the content at step S180.

Subsequent step S190 judges whether a main service burst has been received (see also steps S 320 and S330 in Fig. 12) during the processing time of the zapping service. If step S190 judges that no main service could be received during the processing time of the zapping service the receiver loops to the beginning (S190: No) and waits for the next zapping data burst.

If a main service data burst is received during the preprocessing of the zapping service data (S190: Yes) the "Zapping Service Handler" (S200) is started. The sub steps S21 0 to S240 will be explained in more detail with reference to the lower part of Fig.11. Step S200 parses the received main service data by frame type. The received data includes an amount of at least I- and P- frames and the complete data are passed frame by frame until an I-frame or a P-frame matching to a previously received and stored I-frame is found (S210). Although the flowchart of Fig. 11 assumes for simplicity, that only I-frames and P-frames are available within the received main service, the present invention is not limited to this case. For instance, if bidirectional video coding is applied, the main service may also comprise B-frames, which will be ignored by the zapping service handler.

When a P-frame is found (S210: No) the RTP timestamps from this main service P-frame and the stored zapping service I-frame are compared at step S220. If the timestamps are equal (S230: Yes) the data for the main service P-frame is deleted and the decoding means 220 gets the instruction to use the zapping service I-frame for reference while decoding the following main service P-frames (S240). If the timestamps are not equal (S230: No), the current main service P-frame is dropped (S235), and the flow returns to step S210.

After step S240, the zapping service handler ends, and further processing of the main service video data is done by the "Main Service Processing Loop" as indicated by the arrow from S200 to S300 in Fig. 12.

Sub steps of the main service processing loop S300 will be described in more detail with respect to the right part of the flowchart of Fig. 12.

At step S340 the video decoder starts to assemble the frames of the main service from the received IP payload data. As in the described example the video decoder has already been initialized with the help of the zapping IDR parameter sets at previous step S140, the subsequent judgement of step S350 will result in "Yes", and the flow changes directly to step S360. Alternatively, if for instance no zapping service data have been received prior to the main service burst, initialization may be performed through steps S352 and S354 in the right branch of the flowchart.

Processing of step S360 differs upon whether a zapping service I-frame is used for further decoding or a main service I-frame has been found in the received data and will be used as a reference for the further decoding. If a zapping service I-frame is used, step S360 shall change some header information in the following main service P-frames to be in compliance with standard ISO/IEC 14496-10 "Information Technology - Coding of audio -visual objects - Part 10: Advanced Video Coding".

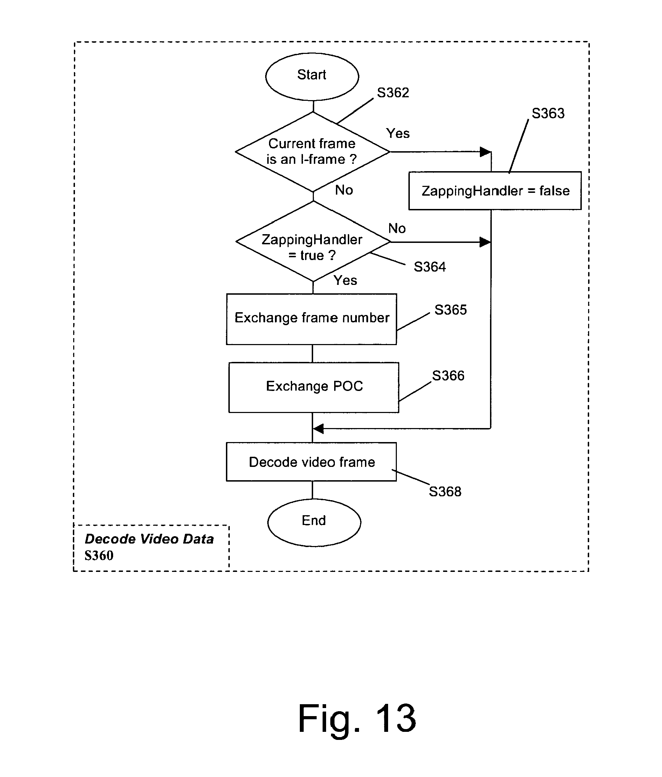

A simplified flowchart of the details of step S360 is presented in Fig. 13. If a zapping service I-frame is employed as reference (S362: No, S364: Yes) for the adjacent P-frames, the frame numbers located in the picture headers and the picture order count (POC) numbers in the slice headers are to be exchanged according to ISO/IEC 14496-10 standard (subtracting a constant offset S365 and S366). The inserted values in the first main service P-frame that uses the zapping service I-frame as a reference must match to a P-frame immediately following an IDR. In the following P-frames the numbers shall be replaced according to an ISO/IEC 14496-10 for a seamless video stream. Accordingly, the video decoder will not report any error while decoding these P-frames. This exchange of header information shall be done until a main service I-frame is found (S362: Yes).

Returning to Fig.12, in subsequent step S370 the decoded video data will be sent to the video buffer and output for display when desired. The decoder will stay in the main service processing loop S300 until the subsequent user service changes, the terminal is switched off or other interrupts like a signal loss occurs and the consecutive main service burst could not be received. In this case the terminal shall start from the beginning and try to receive the main service burst or the corresponding zapping service.

The foregoing detailed description has been performed only by way of example and is not intended to limit the scope of the present invention. A person skilled in the art is aware of various modifications that may be performed in implementing the present invention.

For instance, the present invention is not limited to a DVB-H broadcast environment and H.264/AVC video codec. If other video codecs are used (e.g. VC-1) the zapping pictures shall be encoded as Random Access Points (RAP). RAPs are a common declaration for video frames that can be used for immediate video decoding start. In the specific case of H.264/AVC RAPs are IDRs. Accordingly, a person skilled in the art is aware that a zapping service Random Access Points (RAP) can be used as decoding entry point in a similar way, if the main video service is encoded with a different video codec.

Further modification concerns the format of the zapping service images. The transmitted zapping service may contain pictures of any format (jpeg, png, gif), which can be decoded in the receiving terminal, to be used as a replacement for a main service P-frame in accordance with the present invention.

In summary, the present invention relates to an improved zapping service for broadcasting digital video data to mobile receiving terminals, and in particular to a video encoder and a video decoder therefore. The zapping service contains still pictures (intra-coded frames) that are synchronized with a corresponding P-frame of a main video service. The respective synchronization data is generated by the video encoder and transmitted to the mobile receiving terminal. The video decoder of the mobile receiving terminal is capable of employing the synchronization data to use a zapping service I-frame as a Random Access Point for decoding an encoded main service image sequence. Accordingly, waiting time until the main video service is ready for display after selection of a main new video service (zapping) is reduced, and a smaller number of bandwidth consuming I-frames have to be transmitted in the main service channel. Thereby the bandwidth requirements are reduced.

## Claims

1. A video encoder for encoding a sequence (105) of input video images for transmission to a mobile receiver, comprising:
coding means (110) for encoding the input image sequence (105) into a sequence (111) of encoded image data employing a predictive coding procedure,
**characterized by**
synchronization means (130) for generating synchronization data indicating the position of an individual image to be transmitted separately to the mobile receiver within said input image sequence (105).

2. A video encoder according to claim 1, further comprising still image coding means (120) for encoding said individual image to be transmitted to the mobile receiver separately.

3. A video encoder according to claim 2, wherein said still image coding means (120) encoding the individual image as an intra-coded frame (I).

4. A video encoder according to claim 3, wherein said still image coding means (120) encoding the individual image as an instantaneous decoding refresh access unit (IDR).

5. A video encoder according to any of claims 1 to 4, wherein said synchronization means (130) generating synchronization data for indicating the positions of a plurality of individual images to be transmitted separately to the mobile receiver within said input image sequence (105).

6. A video encoder according to any of claims 1 to 5, further comprising selection means (505) for selecting a predetermined image of said input image sequence (105) as individual image to be transmitted to said receiver separately.

7. A video encoder according to claim 6, wherein said coding means (110) encoding a selected predetermined image within said sequence of encoded image data (111) as P-frame (P).

8. A video encoder according to claim 7, wherein said selection means (505) selecting every Nth image of the input image sequence (105) that is to be encoded as a P-frame by said coding means (110) as individual image to be transmitted to said receiver separately, wherein N is a natural number.

9. A video encoder according to claim 6 or 7, further comprising
a timer for repeatedly counting a predetermined time-out period,
wherein said selection means (505) selecting a current image of the input image sequence (105) as individual image to be transmitted to said receiver separately each time after said predetermined time-out period has elapsed.

10. A video encoder according to any of claims 1 to 9, further comprising a still image buffer for storing images of said input image sequence (105), wherein
an image stored in said still image buffer is used as said individual image to be transmitted to the mobile receiver separately.

11. A video encoder according to any of claims 1 to 10, further comprising a network packetizer (140) for encapsulating all data to be transmitted to Internet Protocol (IP) packets (141).

12. A video encoder according to claim 11, wherein said packets (141) comprising timestamps included within said synchronization data.

13. A video encoder according to claim 11 or 12, wherein said network packetizer (140) encapsulating the data to Internet Protocol (IP) packets in conjunction with User Datagram Protocol (UDP) and Real Time Protocol (RTP).

14. A video encoder according to claim 12 and 13, wherein said synchronization means (130) inserting said timestamps in the Real Time Protocol (RTP) packet headers, such that Real Time Protocol (RTP) packets including data originating from the same image of the input image sequence (105) have the same timestamp.

15. A transmitter for transmitting a sequence of encoded image data (111) to a mobile receiver, comprising
a video encoder according to any of claims 1 to 14, and
transmission means for transmitting said sequence (111) of encoded image data, said individual image (112) and said synchronization data (111, 112).

16. A transmitter according to claim 15, wherein said transmission means transmitting said sequence (111) of encoded image data in form of bursts (10)
wherein said bursts (10) are transmitted in intervals (20) on a first transmission channel.

17. A transmitter according to claim 16, wherein said transmission means transmitting individual images (121) in form of bursts (50) in intervals (60) on another transmission channel.

18. A transmitter according to claim 17, wherein each of said bursts (50) for transmitting said individual images comprising a single individual image.

19. A transmitter according to claim 17 or 18, wherein the intervals (20) between said bursts (10) for transmitting said sequence (111) of encoded image data being larger than the intervals (60) between said bursts (50) for transmitting the individual images (121).

20. A transmitter according to any of claims 15 to 19, wherein said sequence of encoded image data (111) is transmitted in compliance with DVB-H or DMB standard.

21. A video decoder for decoding encoded image data in a mobile receiver, said mobile receiver receiving a sequence of encoded image data (221) and image data (222) of an individual image together with synchronization data indicating a position of said individual image with respect to the image sequence, said video decoder comprising:
decoding means (220) for decoding encoded image data of the image sequence (221) employing a predictive decoding procedure, and
synchronizing means (260) for starting the decoding process of said decoding means (220) based on the position of said individual image, such that the predictive decoding of the encoded image data following the indicated position refers to the individual image as a reference image.

22. A video decoder according to clam 21, wherein said received image data (222) of an individual image are encoded image data, and
said video decoder further comprising still image decoding means (220) for decoding said encoded image data of said individual image.

23. A video decoder according to claim 22, wherein said individual image is encoded as an intra-coded frame (I).

24. A video decoder according to claim 23, wherein said individual image being encoded as an instantaneous decoding refresh (IDR) access unit, and said synchronizing means (260) employing said instantaneous decoding refresh (IDR) access unit as a Random Access Point for decoding said encoded image data of said sequence.

25. A video decoder according to any of claims 21 to 24, wherein the position of the individual image is the same or close to the position of a P-frame (P) within said sequence (221) of encoded image data.

26. A video decoder according to any of claims 21 to 25, wherein said sequence (221) of encoded image data is received in form of bursts (10) that are transmitted in intervals (20).

27. A video decoder according to claim 26, wherein said individual image is received prior to the burst (10) comprising encoded image data of the sequence including the image position indicated by said synchronization data.

28. A video decoder according to any of claims 21 to 27, wherein the data are received encapsulated in form of Internet Protocol (IP) packets (131).

29. A video decoder according to claim 28, wherein said synchronization data comprising timestamps included in said Internet Protocol (IP) packets.

30. A video decoder according to claim 28 or 29, wherein the data are encapsulated to Internet Protocol (IP) packets in conjunction with User Datagram Protocol (UDP) and Real Time Protocol (RTP).

31. A video decoder according to claims 29 and 30, wherein said timestamps are included in the Real Time Protocol (RTP) packet headers.

32. A video decoder according to claim 31, wherein a Real Time Protocol (RTP) packet comprising encoded image data of the sequence including the image position indicated by said synchronization data and a Real Time Protocol (RTP) packet comprising the data of said individual image having the same timestamp.

33. A video decoder according to claim 31, wherein a Real Time Protocol (RTP) packet comprising encoded image data of the sequence including the image position indicated by said synchronization data and a Real Time Protocol (RTP) packet comprising the data of said individual image having timestamps close to each other.

34. A video decoder according to any of claims 21 to 33, wherein said sequence (221) of encoded image data is received in compliance with DVB-H or DMB standard.

35. A method of encoding a sequence of input video images for transmission to a mobile receiver, comprising the steps of
encoding the input image sequence (105) into a sequence (111) of encoded image data employing a predictive coding procedure,
**characterized by**
generating synchronization data indicating the position of an individual image to be transmitted separately to the mobile receiver within said input image sequence (105).

36. A method according to claim 35, further comprising the step of encoding said individual image to be transmitted to the mobile receiver separately.

37. A method according to claim 36, wherein said step of encoding the individual image encoding the individual image as an intra-coded frame (I).

38. A method according to claim 37, wherein said step of encoding the individual image encoding the individual image as an instantaneous decoding refresh (IDR) access unit.

39. A method according to any of claims 35 to 38, wherein said synchronization data generating step generating synchronization data for indicating the positions of a plurality of individual images to be transmitted separately to the mobile receiver within said input image sequence (105).

40. A method according to any of claims 35 to 39, further comprising the step of selecting a predetermined image of said input image sequence as individual image to be transmitted to said receiver separately.

41. A method according to claim 40, wherein said step of encoding the image input sequence encoding a selected predetermined image within said sequence (111) of encoded image data as P-frame (P).

42. A method according to claim 41, wherein said selecting step selecting every Nth image of the input image sequence that is to be encoded as a P-frame (P) as individual image to be transmitted to said receiver separately, wherein N is a natural number.

43. A method according to claim 40 or41, further comprising the step of
repeatedly counting a predetermined time-out period, wherein
said selecting step selecting a current image of the input image sequence (105) as individual image to be transmitted to said receiver separately each time after said predetermined time-out period has elapsed.

44. A method according to any of claims 35 to 43, further comprising the step of transmitting said sequence of encoded image data (111), said individual image (121) and said synchronization data (111, 121) to said mobile receiver.

45. A method according to claim 44, wherein said transmitting step transmitting said sequence of encoded image data in form of bursts (10) wherein said bursts (10) are transmitted in intervals (20) on a first transmission channel.

46. A method according to claim 45, wherein individual images are transmitted in form of bursts (50) in intervals (60) on another transmission channel.

47. A method according to claim 46, wherein each of said bursts (50) for transmitting said individual images comprising a single individual image.

48. A method according to claim 46 or 47, wherein the intervals (20) between said bursts (10) for transmitting said sequence (111) of encoded image data being larger than the intervals (60) between said bursts (50) for transmitting the individual images.

49. A method according to any of claims 45 to 48, further comprising the step of encapsulating all data to be transmitted in bursts (10, 50) to Internet Protocol (IP) packets (141).

50. A method according to claim 49, wherein said packets (141) comprising timestamps included within said synchronization data.

51. A method according to claim 49 or 50, wherein said encapsulating step encapsulating the data to Internet Protocol (IP) packets in conjunction with User Datagram Protocol (UDP) and Real Time Protocol (RTP).

52. A method according to claim 49 and 50, wherein said synchronization step inserting said timestamps in the Real Time Protocol (RTP) packet headers, such that Real Time Protocol (RTP) packets including data originating from the same image of the input image sequence (105) have the same timestamp.

53. A method according to any of claims 43 to 51, wherein said sequence of encoded image data (111) is in compliance with DVB-H standard.

54. A method of decoding encoded image data in a mobile receiver (200), said mobile receiver (200) receiving a sequence (221) of encoded image data and image data (222) of an individual image together with synchronization data indicating a position of said individual image with respect to the image sequence (221), the method comprising the steps of
decoding (S360) encoded image data of the image sequence (221) employing a predictive decoding procedure, and
employing (S220, S230, S240) said synchronization data for starting (S354) the decoding process (S360) based on the position of said individual image, such that the predictive decoding of the encoded image data following the indicated position refers to the individual image as a reference image.

55. A method according to claim 54, wherein said received image data of an individual image are encoded image data, and
the method further comprising the step of decoding (S170) said encoded image data (222) of said individual image.

56. A method according to claim 55, wherein said individual image is encoded as an intra-coded frame (I).

57. A method according to claim 56, wherein said individual image being encoded as an instantaneous decoding refresh (IDR) access unit, and said step of decoding (S360) encoded image data of said sequence employing said instantaneous decoding refresh access unit (IDR) as a Random Access Point for decoding said encoded image data of said sequence.

58. A method according to any of claims 54 to 57, wherein the position of the individual image is the same or close to the position of a P-frame (P) within said sequence of encoded image data.

59. A method according to any of claims 54 to 58, wherein said sequence of encoded image data is received in form of bursts (10) that are transmitted in intervals (20).

60. A method according to claim 59, wherein said individual image is received prior to the burst (10) comprising encoded image data of the sequence (221) including the image position indicated by said synchronization data.

61. A method according to any of claims 54 to 60, wherein the data are received encapsulated in form of Internet Protocol (IP) packets.

62. A method according to claim 61, wherein said synchronization data comprising timestamps included in said Internet Protocol (IP) packets.

63. A method according to claim 61 or 62, wherein the data are encapsulated to Internet Protocol (IP) packets in conjunction with User Datagram Protocol (UDP) and Real Time Protocol (RTP).

64. A method according to claims 62 and 63, wherein said timestamps are included in the Real Time Protocol (RTP) packet headers.

65. A method according to claim 64, wherein a Real Time Protocol (RTP) packet comprising encoded image data of the sequence including the image position indicated by said synchronization data and a Real Time Protocol (RTP) packet comprising the data of said individual image having the same timestamp.

66. A method according to claim 64, wherein a Real Time Protocol (RTP) packet comprising encoded image data of the sequence including the image position indicated by said synchronization data and a Real Time Protocol (RTP) packet comprising the data of said individual image having timestamps close to each other.

67. A method according to any of claims 54 to 66, wherein said sequence of encoded image data (221) is in compliance with DVB-H standard.

68. A mobile receiver for receiving a sequence (221) of encoded image data for display, comprising
a receiving section (210) for receiving said sequence (221) of encoded image data and image data (222) of an individual image together with synchronization data indicating a position of said individual image with respect to said image sequence,
a video decoder (220) according to any of claims 21 to 34, and
a display (250) for displaying image data received by said receiving section (210) and decoded by said video decoder (220).

69. A mobile receiver according to claim 68, wherein said receiving section (210) receiving said sequence of encoded image data in bursts (10), said bursts (10) being separated by predetermined time intervals (20), the mobile receiver further comprising a still image buffer (230a) for storing the image data of the individual image, until a burst (10) comprising the position of said sequence of encoded image data indicated by said synchronization data has been received.

70. A mobile receiver according to claim 69, wherein
said receiving section (210) further being adapted to receive a sequence of encoded image data from a plurality of transmission channels,
the mobile receiver further comprising selection means for selecting a particular transmission channel for reception, and
said receiving section (210) receiving a particular individual image such that the synchronization data indicating the position of the received image data of the particular individual image with respect to a sequence of encoded image data received on said selected transmission channel.

71. A mobile receiver according to claim 70, wherein said display (250) being adapted to display said particular individual image as a still image after selecting said particular transmission channel for reception, until said data of the sequence (221) of encoded image data received on the selected transmission channel has been decoded for display.

72. A mobile receiver according to any of claims 68 to 71, being adapted to start the display of the encoded image data with reduced initial frame rate.

73. A mobile receiver according to claim 72, wherein the start of the display is shifted backward corresponding to the additional display time resulting from said reduced initial frame rate.
